Europäisches Patentamt

European Patent Office

Office européen des brevets

(11) Numéro de publication: **0 133 824**
**B1**

(12) **FASCICULE DE BREVET EUROPEEN**

(45) Date de publication du fascicule du brevet: **18.05.88**

(51) Int. Cl.⁴: **H 04 Q 1/14**

(21) Numéro de dépôt: **84401176.7**

(22) Date de dépôt: **06.06.84**

(54) **Dispositif de raccordement modulaire pour répartiteur téléphonique.**

(30) Priorité: **29.07.83 FR 8312516**

(43) Date de publication de la demande:
**06.03.85 Bulletin 85/10**

(45) Mention de la délivrance du brevet:
**18.05.88 Bulletin 88/20**

(84) Etats contractants désignés:
**AT BE CH DE FR GB IT LI LU NL SE**

(56) Documents cités:
**EP-A-0 071 264**
**EP-A-0 074 898**
**FR-A-2 446 040**

(73) Titulaire: **Nozick, Jacques E.**
**C.T.M. 28 rue Broca**
**F-75005 Paris (FR)**

(72) Inventeur: **Nozick, Jacques E.**
**C.T.M. 28 rue Broca**
**F-75005 Paris (FR)**

(74) Mandataire: **Pinguet, André**
**CAPRI 28 bis, avenue Mozart**
**F-75016 Paris (FR)**

Courier Press, Leamington Spa, England.

## Description

La présente invention a pour objet un système ou un dispositif de raccordement modulaire pour répartiteur téléphonique, du type comprenant des barres verticales sur lesquelles peuvent être fixés des éléments de raccordement pouvant constituer une partie de réglette ou de tête de câble.

On connaît déjà un répartiteur (brevet européen 74 898) comportant un profilé, muni de différents éléments organiques tels que des blocs de connecteurs d'un premier type et des blocs de connecteurs d'un second type, des anneaux, etc. Ce connecteur permet la réalisation en usine de la plupart des opérations. Le procédé d'emploi comprend le montage d'éléments organiques sur un profilé, puis la mise en place du profilé muni de ces éléments.

Si la préparation en usine de l'ensemble permet de réaliser des économies, la modification de la disposition des éléments, ou l'adaptation des éléments au fur et à mesure de l'installation des lignes ne sont pas simplifiées.

L'invention a pour objet un répartiteur téléphonique, dont le montage sur place, et les modifications sont des opérations simples et rapides à exécuter.

La présente invention a pour objet un dispositif de raccordement modulaire pour répartiteur téléphonique, comprenant des barres verticales sur lesquelles peuvent être fixés des éléments de raccordement ou modules, de forme générale rectangulaire, pouvant constituer une partie de réglette ou de tête de câble, chaque barre verticale ayant une résistance suffisante pour recevoir directement et supporter des modules, et est constituée avantageusement par un profilé 2, formant un rail auto-porteur, caractérisé en ce que le profilé comporte une face avant prévue pour recevoir les modules, en ce que la fixation des modules est réalisée de façon encliquetable par au moins trois liaisons de deux natures différentes disposées en quinconce, au moins une liaison par appui contre une surface de la face avant et au moins une liaison par un accrochage au moyen d'un crochet appliqué sur une surface opposée à la face avant, le profilé présentant au moins trois zones longitudinales pour la fixation des modules, dont au moins une zone d'appui sur la face avant et au moins une zone d'accrochage sur une surface opposée à la face avant.

Dans une forme de réalisation avantageuse, chaque module comporte un guide-fils sur au moins un côté adjacent ou face de sortie des fils.

Avantageusement, le guide-fil est constitué, de façon en soi connue, par un anneau solidaire du module, anneau fendu, de préférence par une fente oblique.

Selon une autre caractéristique de la présente invention, les moyens de fixation de chaque module sur un rail autoporteur, sont avantageusement constitués par deux pieds d'appui et deux crochets de traction faisant partie intégrante du corps du module, l'ensemble présentant une certaine élasticité, permettant le montage par encliquetage et le démontage. Un crochet peut être souple et l'autre crochet, renforcé, peut servir de charnière. Le profilé, ou rail auto-porteur, peut comporter des canules de fixation pour des anneaux, crochets ou analogue. Plusieurs rails sont liés aux deux extrémités, haute et basse, pour former la charpente du répartiteur.

D'autres caractéristiques de l'invention apparaîtront au cours de la description qui va suivre, donnée à titre d'exemple non limitatif en regard des dessins ci-joints et qui fera bien comprendre comment l'invention peut être réalisée.

Sur les dessins:—

la figure 1 est une vue en élévation d'un module selon l'invention avec des canaux de câblages non visibles, indiqués en pointillés et une connexion de chaque côté, et vue en coupe du rail auto-porteur combiné avec le profil;

la figure 2 est une vue en plan de dessus de plusieurs modules montés sur un rail auto-porteur, conformément à la présente invention;

la figure 3 est une vue latérale de l'ensemble de la figure 2;

la figure 4 est une vue illustrant la mise en place ou l'enlèvement d'un module sur un rail auto-porteur;

la figure 5 est une vue en coupe d'un exemple de rail auto-porteur selon l'invention, avec indication d'un crochet de guidage de fils;

la figure 6 est une vue analogue à la figure 4, avec une variante de rail auto-porteur;

la figure 7 est une vue analogue à la figure 2, représentant deux modules juxtaposés, un module à coupure et un module auxiliaire; et

la figure 8 représente l'ensemble de la figure 7, vue de profil, avec la paroi avant enlevée pour permettre la représentation schématique d'un exemple de structure intérieure.

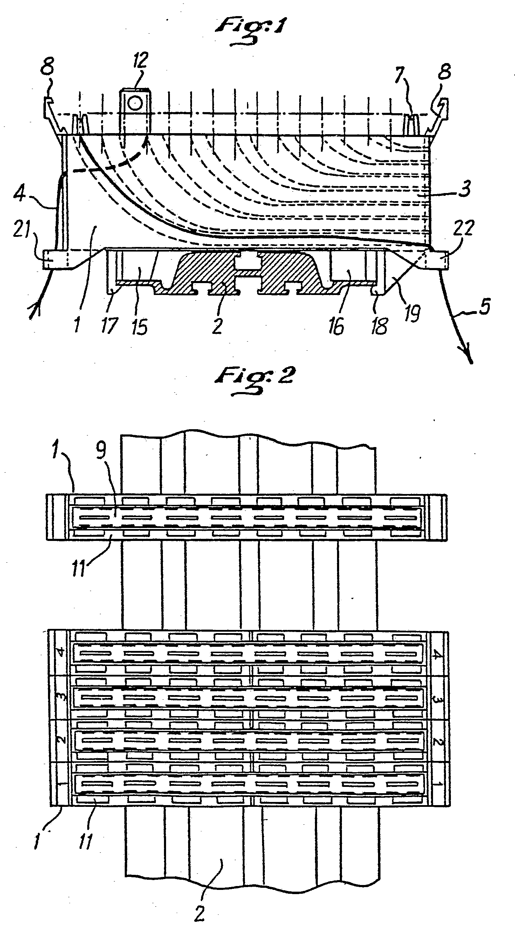

Sur les figures 1, 2 et 3, on a représenté un module 1 monté sur un rail 2 auto-porteur. C'est un module ayant deux double parois: il comporte dans chaque face des canaux 3 en forme de crosse établissant des liaisons entre une rangée de contacts sur la face supérieure et une face de côté correspondante, pour y passer des fils 4, 5. On a représenté à titre d'exemple un module comportant un contact auto-dénudant 7, des porte-étiquettes 8, un support de contact 9, une embase 10, des parois doubles passe-fil 11, un élément de coupure 12.

Pour sa fixation sur le support 2, le module comporte deux pieds d'appui 15, 16 et deux crochets 17, 18. Le crochet 17 est relativement souple, pour permettre l'encliquetage, tandis que le crochet 18 est renforcé par un voile 19, ce qui permet de l'utiliser comme charnière pour le mettre en place sur le rail ou l'en enlever, comme représenté sur la figure 4.

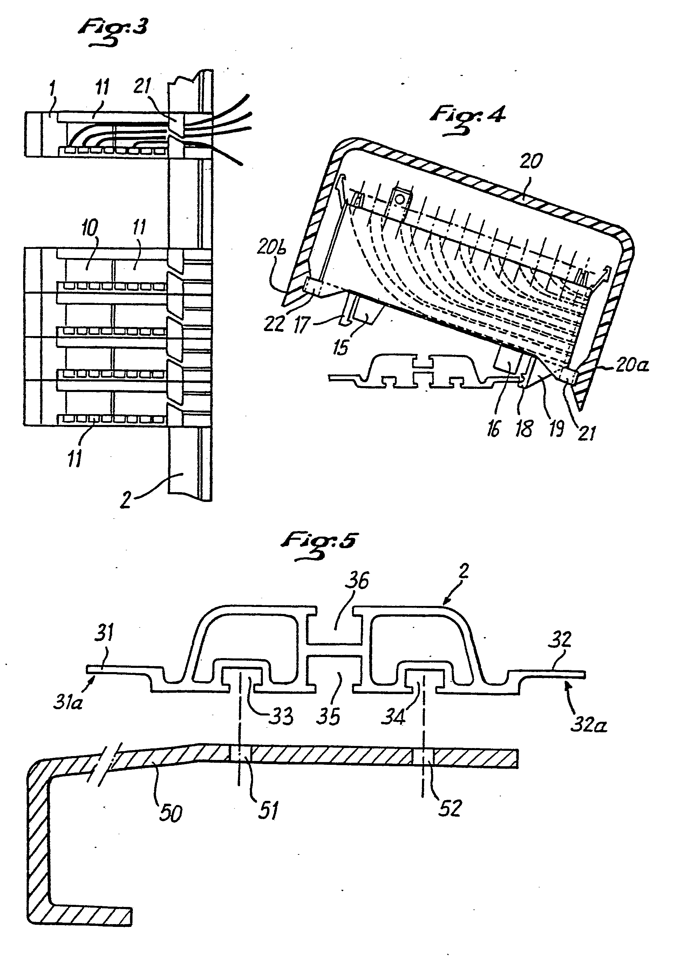

Selon une caractéristique de la présente invention, le module comporte sur le côté faisant saillie de la face où débouchent les canaux passe-fil, un guide-fil 21, 22, dans lequel on fait passer les fils 4, 5, respectivement. Comme représenté sur la figure 3, chaque guide-fil peut être réalisé sous forme d'un anneau avec une fente oblique pour permettre la mise en place du fil. Les fils peuvent ainsi être placés suivant une disposition désirée, et maintenus dans cette disposition sans avoir besoin d'autres éléments que le module et le rail support.

Sur la figure 4, on a représenté en coupe un couvercle protecteur 20, qui peut recouvrir une série de modules, et vient s'encliqueter par ses bords 20a, 20b sur des points saillant latéralement du module, par exemple sur les anneaux guide-fil 21, 22. Avantageusement, le protecteur 20 est en matière plastique moulée, avec une souplesse suffisante pour avoir un encliquetage facile. Il peut servir à porteur des étiquettes ou des indications concernant les modules qu'il protège.

Un premier exemple de rail auto-porteur 2 est représenté sur la figure 5. Il comporte des ailes latérales 31, 32, sous les bords 31a, 32a desquelles viennent se fixer les crochets 17, 18 des modules, et contre la surface plane desquelles viennent s'appliquer les pieds d'appui 15, 16 des modules. Le rail comporte avantageusement des rainures longitudinales 33, 34, 35, 36 dont les bords sont rapprochés pour former des canules de fixation. On peut ainsi fixer directement sur ce rail un crochet 50 dans lequel des trous 51, 52 ont été forés pour la fixation dans les canules 33, 34 par exemple.

Les canules permettent de recevoir des vis ou boulons de diverses dimensions. Ainsi, on peut avec de tels profilés constituer directement un répartiteur. Il suffit de lier les profilés en haut et en bas à des supports horizontaux.

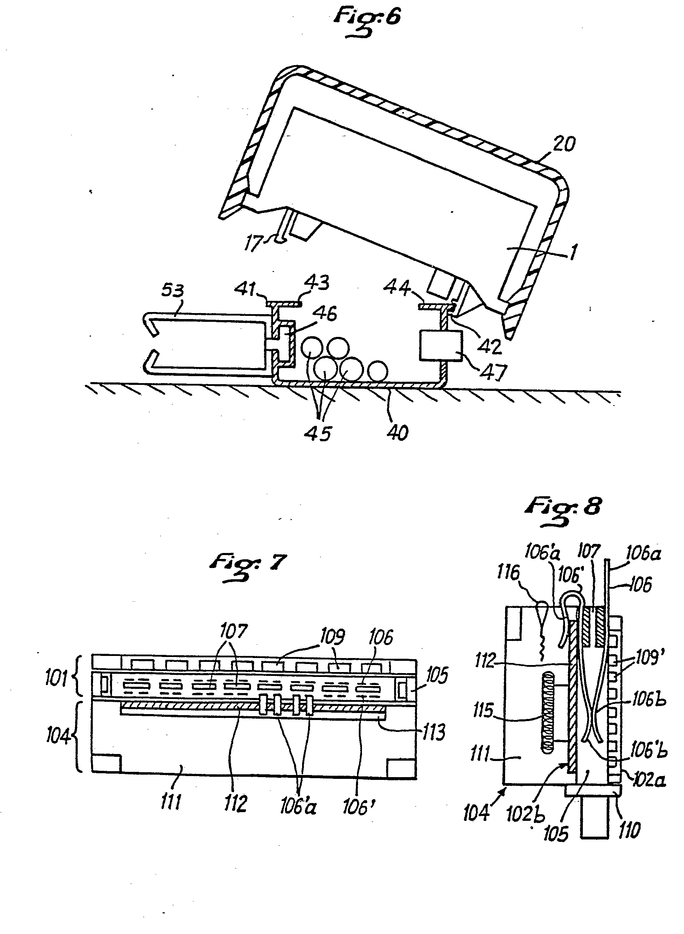

La figure 6 représente en section droite un deuxième exemple de rail auto-porteur 40. La section présente dans son ensemble la forme d'un U avec des rebords 41, 42 pour recevoir les crochets 17, 18 d'un module 1 et des bandes planes 43, 44 pour recevoir les pieds d'appui 15, 16 du module 1. La forme en U de la section permet de passer des câbles 45. Une rainure longitudinale 46 est représentée, permettant de fixer par exemple un crochet 53. Plusieurs rainures peuvent être prévues. Il est possible avec un outillage simple der percer des trous dans la paroi du rail 40 pour loger ou fixer des éléments auxiliaires tels qu'un connecteur 47.

Sur le profilé vertical, on peut placer au niveau choisi des modules de n'importe quelle fonction, coupure, test, broche (relais permettant le brassage des connexions), protection, visualisation ou toute autre. On a représenté sur les figures 7 et 8 un module à coupure 101 et un module auxiliaire 104.

Le module à coupure 101 est constitué d'un boitier 105 de forme plane, avec deux faces planes 102a, 102b. Dans le boitier 105, sont emprisonnées seize paires de broches 106, 106' disposées deux à deux en vis-à-vis, pour former deux rangées définissant seize paires de contacts (huit doubles paires). Le boitier est prévu pour être fixé sur un rail support (non représenté) de la même façon que les modules précédents. Les extrémités libres 106a, 106'a des broches émergent du boitier par le côté opposé au rail auto-porteur. Chaque broche est constituée par une lamelle élastique ayant une extrémité extérieure 106a, 106'a et une extrémité intérieure 106b, 106'b. Dans chaque paire, une lamelle 106 et une lamelle 106' en regard sont conformées et maintenues dans le boitier 105 de façon que les extrémités intérieures 106b, 106'b soient appliquées élastiquement l'une contre l'autre, dans le prolongement d'un puits 107 de coupure. L'introduction d'un cavalier de coupure dans un puits 107 écarte les extrémités 106b, 106'b l'une de l'autre et forme en outre entre les deux un écran isolant. Des canaux passe-fils 109, 109' peuvent joindre la face supérieure à une face latérale.

Conformément à l'invention, on peut adjoindre à un module de coupure un module auxiliaire 104 comportant un boitier 111 de forme plate et rectangulaire, avec une carte imprimée 112 formant une des parois du module auxiliaire dont le bord supérieur est dégagé grâce à une ouverture allongée 113. L'extrémité extérieure 106'a de chaque broche repliée convenablement et engagée dans l'ouverture allongée 113 (voir figure 8) assure le contact électrique entre la brochet elle-même et un contact prévu sur le bord de la carte, ainsi que la fixation du module auxiliaire contre le module de coupure, la carte 112 étant maintenue appliquée contre la face 102b du module à coupure.

Le module auxiliaire 104 ainsi fixé au module de coupure 101 peut être monté avec ce dernier sur un rail support (non représenté). Il permet de loger des composants électroniques 115 (parasurtensions, résistances, diodes, etc) montés sur un circuit imprimé sur la carte 112. Le boitier peut être percé pour faire apparaître des lamps ou diodes 116 permettant de réaliser des visualisations ou encore un organe tel qu'un bouton poussoir, une douille pour recevoir un organe enfichable. En variante, le module auxiliare peut être fixé sur le rail auto-porteur, comme un module ordinaire.

En variante, les deux extrémités extérieures 106a, 106'a peuvent être droites à l'extérieur, l'extrémité 106'a peut être connectée à la carte par un fil. On choisira avantageusement les dimensions du module auxiliaire pour que son épaisseur soit égale à celle d'un module ou soit un multiple, par exemple le double de celle du module à coupure.

La zone de coupure (entrée des puits 107) est toujours disponible pour le cavalier de coupure. La face avant (côté supérieur ou opposé au rail support) permet d'apposer des marquages.

Avantageusement, le rail auto-porteur 2 ou 40 est un profilé extrudé en aluminium, ce qui réduit le coût de fabrication et permet en pratique toutes les sections, en fonction des charges prévisibles. La section constante du profilé sur toute sa longeur, sans aucun cran, permet de fixer un module à n'importe quel endroit, sans avoir à tenir compte d'un pas quelconque. On peut placer des modules d'épaisseurs diverses, multiple ou non de l'épaisseur d'un module ordinaire. On peut prévoir des modules de fonctions différentes et de tailles diverses, le lien et l'unité étant la fixation directe sur un rail profilé auto-porteur.

## Revendications

1. Dispositif de raccordement modulaire pour répartiteur téléphonique, comprenant des barres verticales (2; 40) sur lesquelles peuvent être fixés des éléments de raccordement ou modules (1, 101, 104) de forme générale rectangulaire, pouvant constituer une partie de réglette ou de tête de câble, chaque barre verticale ayant une résistance suffisante pour recevoir directement et supporter des modules, et est constituée avantageusement par un profilé (2; 40) formant un rail auto-porteur, caractérisé en ce que le profilé (2; 40) comporte une face avant prévue pour recevoir les modules, en ce que la fixation des modules est réalisée de façon encliquetable par au moins trois liaisons de deux natures différentes disposées en quinconce, au moins une liaison par appui (15, 31; 43; 16, 32, 44) contre une surface de la face avant et au moins une liaison par un accrochage (17, 31a, 41; 18, 32a, 42) au moyen d'un crochet (17, 18) appliqué sur une surface opposée à la face avant, le profilé présentant au moins trois zones longitudinales (31, 32, 31a, 32a; 41a, 44) pour la fixation des modules, dont au moins une zone d'appui (31, 32; 43, 44) sur la face avant et au moins une zone d'accrochage (31a, 32a, 41, 42) sur une surface opposée à la face avant.

2. Dispositif selon la revendication 1, caractérisé en ce que chaque barre comporte deux zones d'appui (31, 32; 43, 44) sur la face recevant les modules, et deux zones d'acchrochage (31, 32a; 41, 42) sur la face opposée, chaque module comportant deux pieds d'appui (15, 16) et deux crochets (17, 18), dont l'un au moins est souple.

3. Dispositif selon la revendication 1 caractérisé en ce que le rail auto-porteur (2, 40) comporte au moins une canule de fixation (33—36, 46) pour recevoir un moyen de fixation tel qu'une vis.

4. Dispositif selon la revendication 1, caractérisé en ce qu'il comporte au moins un module auxiliaire (104), renfermant une carte de circuit imprimé et des composants électroniques permettant des fonctions de protection, de visualisation et d'adaptation de ligne.

5. Dispositif selon la revendication 4, caractérisé en ce que le module auxiliaire (104) est muni d'au moins une ouverture pour faire apparaître un organe tel que lampe, bouton-poussoir, douille, module enfichable.

6. Dispositif selon la revendication 4, caractérisé en ce que l'épaisseur du module auxiliaire (104), et l'épaisseur d'un module (1, 101) sont dans un rapport égal à un nombre entier.

7. Dispositif selon une des revendications 1 ou 2, caractérisé en ce que chaque module (1, 101, 104) comporte un guide-fil (21, 22) en saillie sur au moins une face latérale du module, c'est-à-dire les faces perpendiculaires à la face avant.

## Patentansprüche

1. Modulare Anschlußvorrichtung für einen Telefonverteiler, mit senkrechten Stangen (2; 40), auf denen Anschlußorgane oder Module (1, 101, 104) allgemein rechteckiger Form befestigt werden können, die Teil einer Leiste oder eines Kabelkopfs bilden können, wobei jede senkrechte Stange einen ausreichenden Widerstand hat, um Module direkt aufzunehmen und zu tragen, und vorteilhafterweise aus einem Profilstück (2; 40) besteht, das eine selbsttragende Schiene bildet, dadurch gekennzeichnet, daß das Profilstück (2; 40) eine Vorderseite aufweist, um die Module aufzunehmen, daß die Befestigung der Module in einklinkbarer Weise durch mindestens drei Verbindungen zwei verschiedener Arten hergestellt wird, die auf Lücke angeordnet sind, mindestens einer Verbindung durch Auflage (15, 31, 43; 16, 32, 44) auf einer Oberfläche der Vorderseite und mindestens einer Verbindung durch Einhaken (17, 31a, 41; 18, 32a, 42) mittels eines auf eine der Vorderseite entgegengesetzten Oberfläche aufgebrachten Hakens (17, 18), wobei das Profilstück mindestens drei Längsbereiche (31, 32, 31a, 32a; 41 bis 44) zur Befestigung der Module aufweist, davon mindestens ein Bereich zur Auflage (31, 32; 43, 44) auf der Vorderseite und mindestens ein Bereich zum Einhaken (31a, 32a; 41, 42) auf einer der Vorderseite entgegensetzten Oberfläche.

2. Vorrichtung nach Anspruch 1, dadurch gekennzeichnet, daß jede Stange zwei Auflagebereiche (31, 32; 43, 44) auf der die Module aufnehmenden Seite und zwei Einhakbereich (31a, 32a; 41, 42) auf der entgegengesetzten Seite aufweist, wobei jeder Modul zwei Auflagefüße (15, 16) und zwei Haken (17, 18) aufweist, von denen mindestens einer biegsam ist.

3. Vorrichtung nach Anspruch 1, dadurch gekennzeichnet, daß die selbsttragende Schiene (2, 40) mindestens eine Befestigungsaussparung (33—36, 46) zur Aufnahme eines Befestigungsmittels wie einer Schraube aufweist.

4. Vorrichtung nach Anspruch 1, dadurch gekennzeichnet, daß sie mindestens einen Hilfsmodul (104) aufweist, der eine Druckschaltungskarte und elektronische Bauteile einschließt, die Schutz-, Sichtbarmachungs- und Leitungsanpassungsfunktionen ermöglichen.

5. Vorrichtung nach Anspruch 4, dadurch gekennzeichnet, daß der Hilfsmodul (104) mit mindestens einer Öffnung versehen ist, um ein Organ wie eine Lampe, einen Druckknopf, eine Buchse, einen einsteckbaren Module heraustreten zu lassen.

6. Vorrichtung nach Anspruch 4, dadurch gekennzeichnet, daß das Verhältnis der Dicke des Hilfsmoduls (104) zur Dicke eines Moduls (1, 101) gleich einer ganzen Zahl ist.

7. Vorrichtung nach einem der Ansprüche 1 oder 2, dadurch gekennzeichnet, daß jeder Modul (1, 101, 104) eine Drahtführung (21, 22) aufweist, die auf mindestens einer Seitenfläche des Moduls vorsteht, d.h. auf den zur Vorderseite senkrechten Seiten.

## Claims

1. Modular connection device for a telephone distribution frame, the system comprising vertical bars (2, 40) to which can be fixed connection members or modules (1, 101, 104), said modules being generally rectangular in shape and constituting, for example, a portion of a connection strip or of a cable termination, each vertical bar being strong enough to directly receive and support said modules, being, preferably in the form of a free-standing extruded rail (2; 40), characterised in that the rail (2, 40) comprises a front face designed for receiving said modules, in that the fixing of the modules is implemented in a snap-fixing way by means of at least three bonds of two different natures staggered disposed, at least one abutment bond (15, 31, 43; 16, 32, 44) on a surface of the front face and at least one hooking bond (17, 31a, 41; 18, 32a, 42) by means of a hook (17, 18) engaging a surface opposed to said front face, said extruded rail (2; 40) having at least three longitudinal zones (31, 32, 31a, 32a; 41a, 44) for the fixing of said modules, of which at least one abutment zone (31, 32; 43, 44) on the front face and at least one hooking zone (31a, 32a; 41, 42) on a surface opposite to the front face.

2. Device according to Claim 1, wherein each bar has two abutment zones (31, 32; 43, 44) on the module-receiving face and two hooking zones (31a, 32a; 41, 42) on the opposite face, each module including two abutment feet (15, 16) and two hooks (17, 18), at least one of said hooks being flexible.

3. Device according to Claim 1, wherein the free-standing rail (2; 40) includes at least one fixing slot (33—36; 46) for receiving fixing means such as a screw.

4. Device according to Claim 1, wherein the system includes at least one auxiliary module (104) enclosing a printed circuit card and electronic components allowing the implement of functions such as line protection, line condition indication, or line matching.

5. Device according to Claim 4, wherein the auxiliary module (104) includes at least one opening for providing visual access to a component such as a lamp, a push-button, a jack, or a plug-in unit.

6. Device according to Claim 4, wherein the thickness of the auxiliary module (104) and the thickness of an ordinary module are at an integer ratio.

7. Device according to one of Claims 1 and 2, wherein each module (1, 101, 104) includes a wire guide (21, 22) projecting from at least one lateral face of the module, i.e. the faces which are perpendicular to the front face.

*Fig.1*

*Fig.2*

**Fig.3**

**Fig.4**

**Fig.5**

*Fig. 6*

*Fig. 7*

*Fig. 8*